Europäisches Patentamt

European Patent Office

Office européen des brevets

(11) Publication number: **0 176 210**
**B1**

## EUROPEAN PATENT SPECIFICATION

(45) Date of publication of patent specification: **03.10.90**

(51) Int. Cl.⁵: **B 25 H 3/00, B 25 F 5/00**

(21) Application number: **85305755.2**

(22) Date of filing: **14.08.85**

(54) System for storing and charging a rechargeable electric tool.

(30) Priority: **08.04.85 US 720905**
**31.08.84 US 646139**

(43) Date of publication of application:
**02.04.86 Bulletin 86/14**

(45) Publication of the grant of the patent:
**03.10.90 Bulletin 90/40**

(84) Designated Contracting States:
**AT BE CH DE LI NL SE**

(56) References cited:
**GB-A- 460 677**
**GB-A- 604 192**
**US-A- 4 438 483**

(73) Proprietor: **Black & Decker Inc.**
**Drummond Plaza Office Park 1423 Kirkwood**
**Highway**
**Newark Delaware 19711 (US)**

(72) Inventor: **House, Lawrence E., II**
**1409 Lake Park Drive**
**Raleigh North Carolina 27612 (US)**
Inventor: **O'Connor, William H.**
**10009 Avocado Court**
**Raleigh North Carolina 27609 (US)**

(74) Representative: **Lucas, Brian Ronald et al**
**Lucas, George & Co. 135 Westhall Road**
**Warlingham Surrey CR3 9HJ (GB)**

Courier Press, Leamington Spa, England.

## Description

The present invention relates to a method and apparatus for storing and charging rechargeable battery-operated tools.

The advent of high output rechargeable batteries has resulted in the development of a number of different electric tools that operate on a battery power but are recharged from the electric mains. Rechargeable electric vacuums. flashlights and even relatively low power electric power tools may be battery powered.

GB-A-460 677 discloses a miner's lamp which is provided with a clip which, when the lamp is in use, secures the lamp to the miner's helmet or clothing. At the end of the shift the lamp is removed from the helmet or clothing and the clip is used to secure the lamp to a charging rack mounted on a wall.

US-A-4 438 483 shows a portable flashlight with similar features.

Portable electric tools such as drills and the like, and especially rechargeable tools, are infrequently in continuous use. For example, a drill may be used just to form a hole in which a fastener is to be placed, or the article to be drilled may require fitting before the next hold is drilled. While the drill is not being used, it would be convenient to attach it on the clothing of the user rather than placing the tool down and picking it up again each time it is used.

It is an object of the present invention to provide an improved apparatus for storing and charging a rechargeable electric tool.

Accordingly. there is provided by one aspect of the present invention an apparatus for storing and charging a rechargeable battery-operated tool, comprising:

means for removably storing said tool;

means for detachably affixing said storing means to the clothing of a user of the tool, and

recharging means for engaging said detachably affixing means to support said tool during recharging thereof.

Preferably, said storing means comprises a holster, said holster being provided with said detachably affixing means.

The tool may have accessible electrical contacts for recharging of the tool. The holster preferably has means for exposing these electrical contacts when the tool is holstered, and means may by provided for electrically connecting the recharging means to these electrical contacts through said contacts exposing means.

Detent means may be provided operative between the recharging means and the tool for locating and securing the tool relative to the recharging means during recharging of the tool.

Said detachably affixing means may comprise a clip for engagement either with a belt of a user or with a projection of said recharging means. The clip may be resilient and flex sufficiently to accommodate operation of said detent means when said holster, with the tool stored therein, is engaged on said recharging means, and subsequently be flexed for disengagement of said detent means when the holster is to be removed again. In an additional preferred embodiment the holster includes a means for storing drill bits. Preferably the drill bits storage means is detachably affixed to the holster.

It is another object of this invention to provide a method of carrying a rechargeable battery-operated tool in a holster and recharging the tool while holstered.

Accordingly, therefore, there is provided by another aspect of the invention a method for storing and charging a rechargeable battery-operated tool, comprising the steps of removably storing the tool in a holster, detachably affixing the holster to the clothing of a user, thereafter detachably engaging said holster, with said tool stored therein, with a recharging means, and then recharging said tool while in said holster.

Other objects, features and advantages of the present invention will become more fully apparent from the following detailed description of the preferred embodiment, the appended claims and the accompanying drawings.

In the accompanying drawings:

FIG. 1 is a side view of an embodiment of the invention where the rechargeable tool is a drill resting within a holster and in charging contact with a recharging base;

FIG. 2 is a partial cross-sectional view of the drill within the holster showing the belt clip and the opening giving access to the electrical contacts on the housing of the drill;

FIG. 3 is an end view of the drill and holster of Fig. 2;

FIG. 4 is a left side view of the drill within the holster;

FIG. 5 is a cross-sectional view of the holster;

FIG. 6 is an exploded view depicting a means of storing drill bits in a device engaged into the holster;

FIG. 7 is a bottom view of the holster with the drill retained therein;

FIG. 8 is a rear view of the base of the recharging unit;

FIG 9 is a cross-sectional view of the base on the line IX—IX of Fig 8. and

FIG 10 is a front view of the base of the recharging unit.

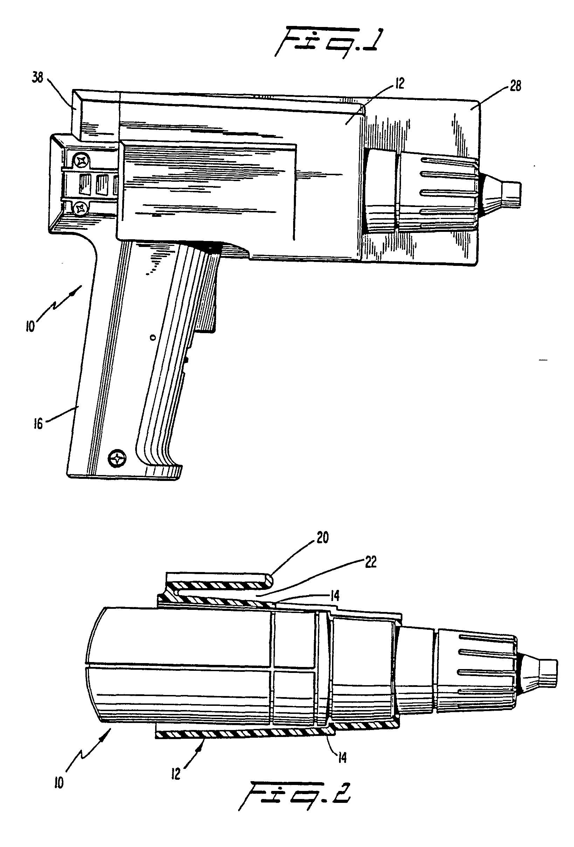

The present invention will now be described in terms of the preferred embodiment which is illustrated in Figs. 1 to 10.

The invention comprises an apparatus for storing and charging a rechargeable electric tool. In the embodiment depicted, the tool is a rechargeable electric drill 10. While the invention finds particular utility in storing and charging a rechargeable electric drill, other rechargeable electric tools may be used with the present invention. The invention's use with a drill, however, is particularly advantageous since a drill is generally used intermittently and may be used while standing on a ladder, where it is inconvenient to place the tool on a surface while another operation is being carried out between drilling operations. Even where placement of the tool at a convenient location is feasible, it is preferred that such a tool be readily accessible by being detachably affixed to the clothing of the user. The preferred embodiment facilitates such use of a tool by providing a holster-like device.

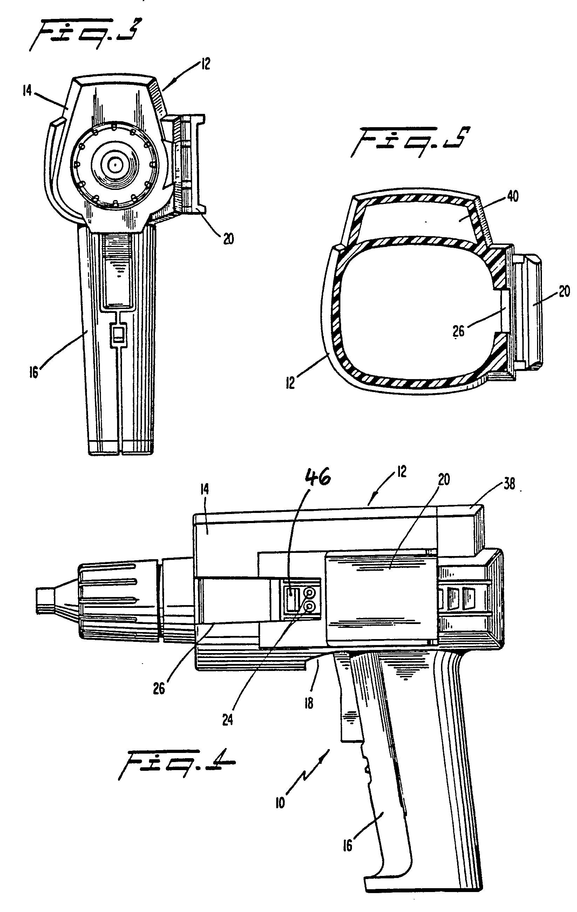

As here embodied and depicted in Figs. 1 through 5 and 7, the apparatus includes a portion disposed to receive and retain the tool. The holster 12 includes a tool storing portion 14 that has an internal surface which complements the outer surface of the body portion of the electric drill, such that the drill is retained therein. The tool storing portion 14 is, of course, adapted to the tool to be stored and locates the tool within the holster. The tool storing portion 14 is sleeve-like and open at both ends, one end opening being for insertion of the tool and being larger than the other end opening through which a chuck or nose portion of the tool extends (see Fig. 2). The drill 10 has a projecting handle 16 which is accommodated in the holster 12 by means of a U-shaped handle opening 18 which extends partly along the bottom of the holster and merges into the end opening thereof through which the tool is inserted.

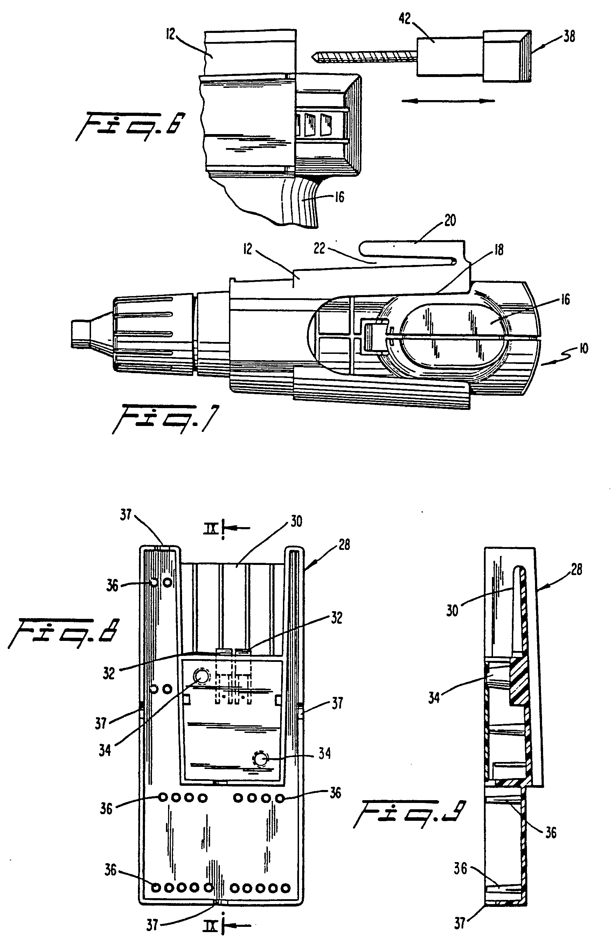

The apparatus further includes means for detachably affixing the holster to the clothing of the user of the tool. As most clearly depicted in Figs. 2 and 3, the holster 12 includes a U-shaped clip 20 having a forwardly facing opening 22 that can be placed over the belt of the user of the tool. In such a manner the holster can be placed on the clothing of the user such that the tool or drill may be conveniently inserted and extracted from the holster when needed. As is evident from Fig. 3, the clip has a significant width across the holster thereby providing a stable and strong attachment of the holster to the clothing of the user. As is evident, the addition of a clip of such dimensions to the side of an electric drill would substantially increase its width and thereby limit the use of such a drill in situations where there is insufficient space to place the drill.

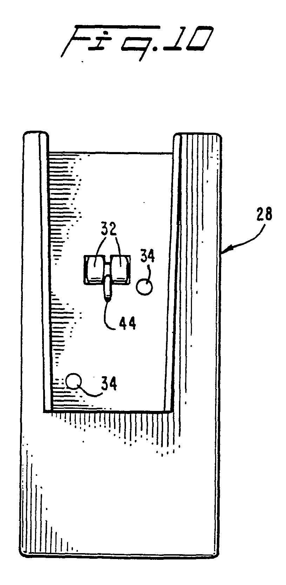

The holster includes means for exposing electrical contacts on the tool. As depicted in Fig. 4, the electric drill 10 includes two electrical contacts 24 on the side of the drill. These contacts are electrically connected to batteries within the rechargeable tool and facilitate the recharging of those batteries. The side of the holster 12 includes a longitudinal slot-like opening 26 that exposes the contacts 24 on the drill 10. The opening 26 extends partway along the side of the holster on which the belt clip 20 is formed. The opening 26 communicates at one end with the end opening of the holster 12 through which the nose end of the tool 10 extends, and terminates at the other end immediately adjacent the entrance into the clip 20.

The apparatus further includes recharging means for applying a recharging current to the batteries in the tool. Such recharging means normally have a transformer that is inserted into a wall receptacle, and a two conductor wire that is attached to the base and is electrically connected to the contacts of the rechargeable tool. As here embodied, the recharging means includes a base disposed to be detachably engaged with the holster. As depicted in Figs. 8 to 10, the base 28 includes a projection 30 that is disposed to engage in the clip opening 22 and extend fully into the clip 20, thereby affixing the holster 12 to the base 28. As shown, the projection 30 is a wall portion of an outer wall of the base 28 and located at the upper end of the base 28. With the holster properly engaged to the base 28, the contacts 24 are aligned with contacts 32 on the base 28. These contacts are engageable, in spite of the tool being within the holster 12, because of the contact opening 26 in the side of the holster. When the holster 12 is properly engaged to the base 28 with the wall portion 30 fully inserted in the clip opening 22, the contacts 24 on the drill 10 are aligned with the contacts 32 on the base. The contacts 32 are sheet metal contacts riveted to a portion of the base 28 and capable of slidingly engaging the drill contacts 24.

Preferably, the portion of the drill 10 exposed through the side opening 26 of the holster 12 includes a recess 46 adjacent and just forward of the contacts 24, as shown in Fig. 4. Additionally, as illustrated in Figs. 9 and 10, the charger base 28 includes a small post 44 projecting outwardly from the wall portion 30. This post is located adjacent the spring contacts 32, just below and between these contacts 32. When the drill 10, while in the holster 12, is engaged on the charging base 28, the post 44 engages in the recess 46 while the clip 20 engages over the projection 30. The engagement of the detent means, formed by the post 44 and recess 46, locates the drill contacts 24 relative to the base contacts 32 for proper electrical engagement thereof, and also stably secures the holstered drill relative to the recharging base 28 to restrain accidental dislodgement thereof while being recharged. Because of the flexibility of clip 20, the holstered drill 10 can move away from the base 28 a sufficient distance to permit engagement and disengagement of the post 44 and recess 46 while the clip 20 is engaged over the wall projection 30. Additionally, it will be apparent that while the post 44 fixes the drill relative to the charging base 28 for recharging, after removal of the holster and drill from the charging base, removal of the drill from the holster is not restrained. The drill may readily be removed from the holster, when being worn by a user, because the detent means 44, 46 is engaged between the base 28 and the drill 10, and not between the holster 12 and the drill 10. This is further ensured by the location of the recess 46 relative to the side opening 26 of the holster.

The cord and transformer of the recharging means are not depicted. However, the cord from the transformer is merely electrically connected to the two contacts 32 in such a manner that the contacts are provided with the proper recharging current.

The base 28 further includes means for attaching or fastening the base to a supporting surface. Attachment holes 34 provide a means for placing fasteners through the base into the surface on which the base is to be mounted. The base further includes pins 36 that project from the interior portion thereof and provide a cord wrap for storing lengths of the cord inside the base. The base may also include openings 37 to allow the cord to exit the base 28 at a number of locations.

The holster may also include means for storing drill bits. As shown in Fig. 6, the holster includes an elastomeric tool storage member 38. The storage member has a plurality of holes disposed to engage and retain tools such as screw driver bits or drill bits within the member 38. The member 38 is stored within the holster 12 by inserting it into a pocket 40 (see Fig. 5) along a side of the holster 12 adjacent the clip 20 and opposite the opening 18 for the drill's handle 16. The pocket 40 has an entrance opening adjacent the end opening in the holster 12 through which the drill 10 is inserted into and withdrawn from the holster, that is, the right hand end in Figs. 4, 6 and 7. The other end of the pocket 40 is closed (see Fig. 3). A plug-like portion 42 of the member 38 fits within the pocket 40 in an interference fit, thereby retaining the member 38 therein. The operator of the drill has ready access to the various tools that can be inserted in the drill. They may be readily obtained by grasping the exposed portion of the member 38 and removing it from the holster thereby providing access to the tools stored therein.

As will be appreciated from the foregoing, the drill is usually stored in the holster, and need only be withdrawn from the holster when performing drilling operations. Otherwise, while the user is working, the holstered drill can be retained clipped to the user's belt. When the user has finished working, the holstered drill is simply unclipped from the user's belt and then clipped onto the recharging base for storage and recharging. It should be noted that the drill remains in the holster while being recharged, and further that the respective electric contacts automatically engage by the action of sliding the clip of the holster over the appropriate wall portion of the base. The base can be secured on any convenient wall, preferably with the wall portion 30 uppermost as in Figs. 8, 9 and 10. Thus, in the preferred recharging disposition, the base 28, holster 12 and drill 10, all interengaged, would be rotated clockwise through 90 degrees from the position shown in Fig. 1; that is, the holstered drill would be inserted vertically downwards, chuck end first, onto the recharging base.

It will further be appreciated that not only does the holster securely locate the drill on the recharging base, but there is no risk of the holster being lost or damaged due to being stored separately from the drill during the charging operation.

The present invention has been described above in terms of the preferred embodiment. Modifications, and other alternative constructions, will be apparent which are within the scope of the invention as defined in the appended claims.

## Claims

1. An apparatus for storing and charging a rechargeable battery-operated tool (10), comprising:

means (12) for removably storing said tool (10).

means (20) for detachably affixing said storing means (12) to the clothing of a user of the tool (10), and

recharging means (28, 30) for engaging said detachably affixing means (20) to support said tool (10) during recharging thereof.

2. The apparatus of Claim 1, characterized in that said storing means (12) comprises a holster (12) said holster (12) being provided with said detachably affixing means (20).

3. The apparatus of Claim 2, characterized by detent means (44, 46) operative between said recharging means (28) and said tool (10), for locating and securing said tool (10) relative to said recharging means (28) during recharging of said tool (10).

4. The apparatus of Claim 2 or 3, characterized in that said tool (10) has accessible electrical contacts (24) for recharging said tool (10) said holster (12) includes means (26) for exposing said electrical contacts (24) when said tool (10) is stored in said holster (12), and said recharging means (28) includes means (32) for electrically connecting said recharging means (28) with said electrical contacts (24) of said tool (10) through said contacts exposing means (26).

5. The apparatus of Claim 4, characterized in that said contact exposing means (26) comprises a contact opening (26) in a side of said holster (12), said electrical contacts (24) of said tool (10) being exposed through said contact opening (26) when the said tool (10) is stored in said holster (12).

6. The apparatus of any preceding claim, characterized in that said detachably affixing means (20) comprises a U-shaped clip (20) placeable over a belt of a user.

7. The apparatus of Claim 6, characterized in that said recharging means (28) has a projection (30) which is engageable in said clip (20).

8. The apparatus of Claim 6 or 7, when directly or indirectly dependent upon Claim 3, characterized in that said clip (20) is resilient, is provided on a side of said holster (12), and allows said holster (12) to be moved away from said recharging means (28) sufficiently to enable said detent means (44, 46) to release said tool (10) from said recharging means (28) for removal of said holster (12) from said recharging means (28).

9. The apparatus of Claim 2, 3, 4, 5 or 8, characterized in that said holster (12) includes means (38) for storing drill bits.

10. The apparatus of Claim 9, characterized in that said storing means (38) comprises an elastomeric member (38) for receiving said drill bits and a pocket in said holster (12), said elastomeric member (38) having a plug-like portion (42) which is an interference fit in said pocket.

11. The apparatus of Claim 4, characterized in that said detachably fixing means (20) comprises a clip (20) on a side of said holster (12), said clip (20) having an open end (22), said contacts exposing means (26) comprises a slot-like opening (26) extending partially along said side and terminating at one end adjacent said open end (22) of said clip (20), said tool's electrical contacts (24) being exposed through said slot-like opening (26) when said tool (10) is received and retained in said holster (12), said recharging means (28) comprises a base (28), and said electrically connecting means (32) comprises sheet metal contacts (32) which engage said tool's electrical contacts (24) when said base (28) is engaged in said clip (20) through said open end (22) of the latter.

12. The apparatus of Claim 11, characterized in that said holster (12) comprises a sleeve open at both ends, said clip (20) being located adjacent one of said sleeve ends and said slot-like opening (26) communicating with the other of said sleeve ends.

13. The apparatus of any preceding claim, characterized in that said base (28) includes means (34) for fastening said base (28) to a supporting surface, said holster (12) comprises a receptacle open at opposite ends for receiving a housing part of said tool (10), and said holster (12) comprises a handle opening (18) extending from one of said open opposite ends partially along a side of said receptacle for accommodating a handle (16) of said tool projecting from said housing part.

14. A method for storing and charging a rechargeable battery-operated tool, comprising the steps of:
removably storing the tool (10) in a holster (12);
detachably affixing the holster (12) to the clothing of a user; thereafter
engaging said holster (12), with said tool (10) stored therein, with a recharging means (28); and then
recharging said tool (10) while in said holster (12).

15. The method of Claim 14, characterized in that said detachably affixing comprises hooking a clip (20) over a belt of the user.

16. The method of Claim 15, characterized in that said engaging comprises hooking said clip (20) over a projection (30) on a base of the recharging means (28).

17. The method of Claim 14, 15 or 16 characterized by electrically connecting and aligning a pair of contacts (24) on the tool with a pair of contacts (32) on the recharging means (28) through an opening (26) in said holster (12).

18. The method of Claim 17, characterized in that the tool contacts (24) and the recharging contacts (32) are automatically aligned and connected when said holster (12) is detachably engaged with said recharging means (28).

19. The method of any one of Claims 14 to 18, characterized by releasably fixing said tool (10) to said recharging means (28) when said holster (12) is engaged with said recharging means (28).

20. The method of Claim 19, characterized in that the tool (10) is automatically releasably fixed to said recharging means (28) when said holster (12) is engaged with said recharging means (28).

21. The method of Claim 14, characterized by simultaneously electrically connecting a pair of contacts (24) on the tool (10) with a pair of contacts (32) of the recharging means (28) and releasably fixing said tool (10) to said recharging means (28) during the step of engaging said holster (12) with said recharging means (28).

**Patentansprüche**

1. Vorrichtung zur Aufbewahrung und Aufladung eines wiederaufladbaren, batteriegetriebenen Werkzeugs (10), aufweisend:
Mittel (12) zum entfernbaren Aufbewahren des Werkzeugs (10).
Mittel (20) zum lösbaren Anbringen der Aufbewahrungsmittel (12) an der Kleidung eines Benutzers des Werkzeugs (10) und
Auflademittel (28, 30) für den Eingriff mit den lösbaren Mitteln (20) zum lösbaren Anbringen zur Halterung des Werkzeugs (10) während dessen Wiederaufladung.

2. Vorrichtung nach Anspruch 1, dadurch gekennzeichnet, daß die Aufbewahrungsmittel (12) eine Halftertasche (12) aufweisen, die mit den Mitteln (20) zum lösbaren Anbringen versehen ist.

3. Vorrichtung nach Anspruch 2, gekennzeichnet durch zwischen den Auflademitteln (28) und dem Werkzeug (10) wirksame Anschlagmittel (44, 46) zum Positionieren und Festhalten des Werkzeugs (10) bezüglich der Auflademittel (28) während der Wiederaufladung des Werkzeugs (10).

4. Vorrichtung nach Anspruch 2 oder 3, dadurch gekennzeichnet, daß das Werkzeug (10) zugängliche elektrische Kontakte (24) zur Wiederaufladung des Werkzeugs (10) hat, daß die Halftertasche (12) Mittel (26) zum Freilegen der elektrischen Kontakte (24) hat, wenn das Werkzeug (10) in der Halftertasche (12) aufbewahrt wird, und daß die Auflademittel (28) Mittel (32) zur elektrischen Verbindung der Auflademittel (28) mit den elektrischen Kontakten (24) des Werkzeugs (10) über die die Kontakte freilegenden Mittel (26) haben.

5. Vorrichtung nach Anspruch 4, dadurch gekennzeichnet, daß die Kontaktfreilegemittel (26) eine Kontaktöffnung (26) in einer Seite der Halftertasche (12) aufweisen, durch die hindurch die elektrischen Kontakte (24) des Werkzeugs (10) freigelegt sind, wenn das Werkzeug (10) in der Halftertasche (12) aufbewahrt wird.

6. Vorrichtung nach einem der vorhergehenden Ansprüche, dadurch gekennzeichnet, daß die Mittel (20) zur lösbaren Anbringung eine über einen Gürtel eines Benutzers positionierbare U-förmige Klemme (20) aufweisen.

7. Vorrichtung nach Anspruch 6, dadurch gekennzeichnet, daß die Auflademittel (28) einen Vorsprung (30) haben, der in Eingriff mit der Klemme (20) bringbar ist.

8. Vorrichtung nach Anspruch 6 oder 7, wenn diese direkt oder indirekt abhängig von Anspruch 3 sind, dadurch gekennzeichnet, daß die Klemme (20) elastisch ist, an einer Seite der Halftertasche (12) vorgesehen ist und es ermöglicht, die Halftertasche (12) ausreichend von den Auflademitteln (28) wegzubewegen, damit die Anschlagmittel (44, 46) das Werkzeug (10) von den Auflademitteln (28) freigeben können, um die Halftertasche (12) von den Auflademitteln (28) zu entfernen.

9. Vorrichtung nach Anspruch 2, 3, 4, 5 oder 8, dadurch gekennzeichnet, daß die Halftertasche (12) Mittel (38) zur Aufbewahrung von Bohrern aufweist.

10. Vorrichtung nach Anspruch 9, dadurch gekennzeichnet, daß die Aufbewahrungsmittel (38) ein elastomeres Element (38) zur Aufnahme von Bohrern und eine Tasche in der Halftertasche (12) aufweisen, wobei das elastomere Element (38) einen stopfenartigen Bereich (42) hat, der sich im Festsitz in der Tasche befindet.

11. Vorrichtung nach Anspruch 4, dadurch gekennzeichnet, daß die Mittel (20) zum lösbaren Anbringen eine Klemme (20) an einer Seite der Halftertasche (12) aufweisen, welche Klemme (20) ein offenes Ende (22) hat, daß die Kontaktfreilegemittel (26) eine schlitzartige Öffnung (26) haben, die sich teilweise entlang der Seite erstreckt und an einem Ende benachbart zum offenen Ende (22) der Klemme (20) endet, die elektrischen Kontakte (24) des Werkzeugs durch die schlitzartige Öffnung (26) freigelegt sind, wenn das Werkzeug (10) von der Halftertasche (12) aufgenommen und in ihr gehalten wird, die Auflademittel (28) eine Basis (28) aufweisen und die Mittel (32) zur elektrischen Verbindung plattenförmige Metallkontakte (32) haben, die in Eingriff mit den elektrischen Kontakten (24) des Werkzeugs stehen, wenn die Basis (28) durch das offene Ende (22) der Klemme (20) in Eingriff mit dieser steht.

12. Vorrichtung nach Anspurch 11, dadurch gekennzeichnet, daß die Halftertasche (12) eine an beiden Enden offene Buchse aufweist, die Klemme (20) benachbart zu einem der Buchsenenden angeordnet ist und die schlitzartige Öffnung (26) in Verbindung mit dem anderen der Buchsenenden steht.

13. Vorrichtung nach einem der vorhergehenden Ansprüche, dadurch gekennzeichnet, daß die Basis (28) Mittel (34) zur Befestigung der Basis (28) an einer Haltefläche aufweist, die Halftertasche (12) einen an gegenüberliegenden Enden offenen Behälter zur Aufnahme eines Gehäuseteils des Werkzeugs (10) bildet und die Halftertasche (12) eine Grifföffnung (18) hat, die sich von einer Seite der offenen, einander gegenüberliegenden Enden zur Anpassungan einen Griff (16) des Werkzeugs, der vom Gehäuseteil vorsteht, teilweise entlang einer Seite des Behälters erstreckt.

14. Verfahren zur Aufbewahrung und Aufladung eines wiederaufladbaren, batteriegetriebenen Werkzeuges, umfassend die Schritte:

entfernbares Aufbewahren des Werkzeugs (10) in einer Halftertasche (12);

lösbares Anbringen der Halftertasche (12) an der Bekleidung eines Benutzers; danach

Ineingriffbringen der Halftertasche (12) mit dem darin aufbewahrten Werkzeug (10) mit Auflademitteln (28); und dann

Wiederaufladen des Werkzeugs (10), während sich dieses in der Halftertasche (12) befindet.

15. Verfahren nach Anspruch 14, dadurch gekennzeichnet, daß die lösbare Anbringung das Anhaken einer Klemme (20) am Gürtel des Benutzers umfaßt.

16. Verfahren nach Anspruch 15, dadurch gekennzeichnet, daß das Ineingriffbringen das Anhaken der Klemme (20) an einem Vorsprung (30) auf einer Basis der Auflademittel (28) umfaßt.

17. Verfahren nach Anspruch 14, 15 oder 16, gekennzeichnet durch die elektrische Verbindung und Ausrichtung eines Paares von Kontakten (24) am Werkzeug mit einem Paar von Kontakten (32) an den Auflademitteln (28) durch eine Öffnung (26) in der Halftertasche (12).

18. Verfahren nach Anspruch 17, dadurch gekennzeichnet, daß die Werkzeugkontakte (24) und die Aufladekontakte (32) automatisch ausgerichtet und verbunden werden, wenn die Halftertasche (12) in lösbaren Eingriff mit den Auflademitteln (28) gebracht wird.

19. Verfahren nach einem der Ansprüche 14 bis 18, gekennzeichnet durch die lösbare Befestigung des Werkzeugs (10) an den Auflademitteln (28), wenn die Halftertasche (12) in Eingriff mit den Auflademitteln (28) steht.

20. Verfahren nach Anspruch 19, dadurch gekennzeichnet, daß das Werkzeug (10) automatisch lösbar an den Auflademitteln (28) befestigt ist, wenn die Halftertasche (12) in Eingriff mit den Auflademitteln (28) steht.

21. Verfahren nach Anspruch 14, gekennzeichnet durch die gleichzeitige elektrische Verbindung eines Paares von Kontakten (24) am Werkzeug (10) mit einem Paar von Kontakten (32) der Auflademittel (28) und lösbare Befestigung des Werkzeugs (10) an den Auflademitteln (28) während des Schrittes des Ineingriffbringens der Halftertasche (12) mit den Auflademitteln (28).

**Revendications**

1. Dispositif pour ranger et recharger un outil (10) fonctionnant sur batterie rechargeable, comportant:

des moyens (12) pour ranger, de façon amovible, ledit outil (10);

des moyens (20) pour fixer, de façon amovible, lesdits moyens de rangement (12) au vêtement d'un utilisateur de l'outil (10), et

des moyens de rechargement (28, 30) pour venir en prise avec lesdits moyens (20) de fixation amovible, pour supporter ledit outil (10) au cours de son rechargement.

2. Dispositif selon la revendication 1, caractérisé par le fait que lesdits moyens de rangement (12) comportent un étui (12), ledit étui (12) étant muni desdits moyens (20) de fixation amovible.

3. Dispositif selon la revendication 2, caractérisé par des moyens de blocage (44, 46), opérant entre lesdits moyens de rechargement (28) et ledit outil (10), pour positionner et bloquer ledit outil (10) par rapport auxdits moyens de rechargement (28) au cours du rechargement dudit outil (10).

4. Dispositif selon la revendication 2 ou 3, caractérisé par le fait que ledit outil (10) présente des contacts électriques accessibles (24) pour recharger ledit outil (10), par le fait que ledit étui (12) présente des moyens (26) pour laisser apparaître lesdits contacts électriques (24) lorsque ledit outil (10) est rangé dans ledit étui (12), et par le fait que lesdits moyens de rechargement (28) présentent des moyens (32) pour relier électriquement lesdits moyens de rechargement (28) avec lesdits contacts électriques (24) dudit outil (10) à travers lesdits moyens (26) laissant apparaitre les contacts.

5. Dispositif selon la revendication 4, caractérisé par le fait que lesdits moyens (26) qui laissent apparaitre les contacts comportent, dans un côté dudit étui (12), une ouverture (26) pour les contacts, lesdits contacts électriques (24) dudit outil (10) apparaissant à travers ladite ouverture (26) prévue pour les contacts lorsque ledit outil (10) est rangé dans ledit étui (12).

6. Dispositif selon l'une quelconque des revendications précédentes, caractérisé par le fait que lesdits moyens (20) de fixation amovible comportent une agrafe (20) en forme de U que l'on peut placer sur la ceinture d'un utilisateur.

7. Dispositif selon la revendication 6, caractérisé en ce que lesdits moyens de rechargement (28) présentent un saillant (30) qui peut venir en prise dans ladite agrafe (20).

8. Dispositif selon la revendication 6 ou 7, lorsqu'elle dépend directement ou indirectement de la revendication 3, caractérisé par le fait que ladit agrafe (20) est souple, qu'elle est prévue d'un côté dudit étui (12), et qu'elle permet audit étui (12) de s'écarter suffisamment desdits moyens de rechargement (28) pour permettre auxdits moyens de blocage (44, 46) de libérer ledit outil (10) d'avec lesdits moyens de rechargement (28) pour permettre de sortir ledit étui (12) hors dudit moyen de rechargement (28).

9. Dispositif selon la revendication 2, 3, 4, 5 ou 8, caractérisé par le fait que ledit étui (12) comporte des moyens (38) pour le rangement des forets.

10. Dispositif selon la revendication 9, caractérisé par le fait que lesdits moyens de rangement (38) comportent un organe élastomère (38) pour recevoir lesdits forets ainsi qu'une poche dans ledit étui (12), ledit organe élastomère (38) présentant une portion (42) formant bouchon qui s'ajuste, avec serrage, dans ladite poche.

11. Dispositif selon la revendication 4, caractérisé par le fait que lesdits moyens (20) de fixation amovible comportent, d'un côté dudit étui (12), une agrafe (20), ladite agrafe (20) présentant une extrémité ouverte (22), par le fait que lesdits moyens (26) laissant apparaitre les contacts comportent une ouverture (26) en forme de fente qui s'étend partiellement le long dudit côté et se termine à une extrémité voisine de ladite extrémité ouverte (22) de ladite agrafe (20), lesdits contacts électriques (24) de l'outil apparaissant à travers ladite ouverture (26) en forme de fente lorsque ledit outil (10) est logé et maintenu dans ledit étui (12), par le fait que lesdits moyens de rechargement (28) comportent une base (28), et par le fait que lesdits moyens (32) de connexion électrique comportent des contacts métalliques (32) sous forme de feuille qui viennent en prise avec lesdits contacts électriques (24) de l'outil lorsque ladite base (28) vient en prise avec ladite agrafe (20) en passant par ladite extrémité ouverte (22) de cette agrafe.

12. Dispositif selon la revendication 11, caractérisé par le fait que ledit étui (12) présente aux deux extrémités une ouverture de fourreau, ladite agrafe (20) étant située près de l'une desdites ouvertures de fourreau et ladite ouverture (26) en forme de fente communiquant avec l'autre desdites ouvertures de fourreau.

13. Dispositif selon l'une quelconque des revendications précédentes, caractérisé par le fait que ladite base (28) comporte des moyens (34) pour fixer ladite base (28) à une surface support, par le fait que ledit étui (12) comporte, aux extrémités opposées, une ouverture de réceptacle pour recevoir une portion du boitier dudit outil (10), par le fait que ledit étui (12) présente, pour la poignée, une ouverture (18) s'étendant, depuis l'une desdites extrémités opposées ouvertes, partiellement le long d'un côté dudit réceptacle pour loger une poignée (16) dudit outil qui déborde de ladite portion de boitier.

14. Procédé de rangement et de rechargement d'un outil fonctionnant sur batterie rechargeable, comportant les étapes consistant à:

ranger, de façon amovible, l'outil (10) dans un étui (12); fixer de façon amovible l'étui (12) au vêtement d'un utilisateur; ensuite

amener en prise ledit étui (12), ledit outil (10) y étant rangé, avec des moyens de rechargement (28); puis

recharger ledit outil (10) pendant qu'il est dans ledit étui (12).

15. Procédé selon la revendication 14, caractérisé par le fait que ladite fixation amovible consiste à agrafer une agrafe (20) sur une ceinture de l'utilisateur.

16. Procédé selon la revendication 15, caractérisé en ce que ladite amenée en prise consiste à agrafer ladite agrafe (20) sur un saillant (30) prévu sur une base des moyens de rechargement (28).

17. Procédé selon la revendication 14, 15 ou 16, caractérisé par les étapes consistant à relier électriquement et à aligner une paire de contacts (24) situés sur l'outil avec une paire de contacts (32) situés sur les moyens de rechargement (28) en passant par une ouverture (26) prévue dans ledit étui (12).

18. Procédé selon la revendication 17, caractérisé par le fait que les contacts (24) de l'outil et les contacts (32) des moyens de rechargement sont automatiquement alignés et reliés lorsque ledit étui (12) vient en prise, de façon amovible, avec lesdits moyens de rechargement (28).

19. Procédé selon l'une quelconque des revendications 14 à 18, caractérisé par le fait de fixer de façon amovible ledit outil (10) sur lesdits moyens de rechargement (28) alors que ledit étui (12) est en prise avec lesdits moyens de rechargement (28).

20. Procédé selon la revendication 19, caractérisé par le fait que l'outil (10) est automatiquement fixé, de façon amovible, auxdits moyens de rechargement (28) lorsque ledit étui (12) est en prise avec lesdits moyens de rechargement (28).

21. Procédé selon la revendication 14, caractérisé par le fait que, simultanément, on relie électriquement une paire de contacts (24) situés sur l'outil (10) avec une paire de contacts (32) des moyens de rechargement (28) et on fixe, de façon amovible, ledit outil (10) sur lesdits moyens de rechargement (28) au cours de l'étape consistant à amener en prise ledit étui (12) avec lesdits moyens de rechargement (28).

Fig.1

Fig.2

FIG.3

FIG.5

FIG.4

Fig.6

Fig.1

Fig.8

Fig.9

EP 0 176 210 B1

Fig.10

4